Europäisches Patentamt

European Patent Office

Office européen des brevets

(11) Veröffentlichungsnummer : **0 361 630 B1**

(12) # EUROPÄISCHE PATENTSCHRIFT

(45) Veröffentlichungstag der Patentschrift :
**10.06.92 Patentblatt 92/24**

(21) Anmeldenummer : **89250034.9**

(22) Anmeldetag : **12.09.89**

(51) Int. Cl.$^5$ : **F16L 21/03, B21D 39/04**

(54) Verfahren und Vorrichtung und Pressfitting zur Herstellung einer unlösbaren, dichten Verbindung von Rohren.

(30) Priorität : **30.09.88 DE 3833748**
**06.10.88 DE 3834353**

(43) Veröffentlichungstag der Anmeldung :
**04.04.90 Patentblatt 90/14**

(45) Bekanntmachung des Hinweises auf die
Patenterteilung :
**10.06.92 Patentblatt 92/24**

(84) Benannte Vertragsstaaten :
**AT BE CH DE ES FR GB GR IT LI LU NL SE**

(56) Entgegenhaltungen :
**DE-A- 2 725 280**
**GB-A- 1 321 652**

(73) Patentinhaber : **MANNESMANN**
**Aktiengesellschaft**
**Mannesmannufer 2**
**W-4000 Düsseldorf 1 (DE)**

(72) Erfinder : **Unewisse, Heinz**
**August-Schmidt-Strasse 40**
**W-4330 Mühlheim/Ruhr (DE)**
Erfinder : **Foering, Herbert**
**Untere Benrather Strasse 25**
**W-5650 Solingen 1 (DE)**

(74) Vertreter : **Presting, Hans-Joachim, Dipl.-Ing.**
**et al**
**Meissner & Meissner Patentanwaltsbüro**
**Herbertstrasse 22**
**W-1000 Berlin 33 (DE)**

**Beschreibung**

Die Erfindung betrifft ein Verfahren zur Herstellung einer unlösbaren dichten Verbindung von Rohren gemäß dem Gattungsbegriff des Hauptanspruches.

Die Herstellung einer unlösbaren dichten Verbindung von dünnwandigen Rohren mit einem die glattendigen Rohrenden umfassenden Fitting, dessen eine hakenförmige Querschnittskontur aufweisende, wulstförmig ausgebildete Enden je einen Dichtring aufnehmen, wobei mittels einer mit einer Betätigungsvorrichtung verbundenen, auswechselbaren Haltevorrichtung mit gelenkig angeordneten Backen, das wulstförmig ausgebildete Ende und gleichzeitig der benachbarte zylindrische Bereich des Fittings zusammen mit dem Rohr plastisch und der eingeschlossene Dichtring elastisch verformt werden, ist bekannt (siehe Prospekt Mannesmann Edelstahlrohr GmbH, Ausgabe 1988). Die Dichtfunktion der Verbindung wird dadurch erreicht, daß durch plastische Verformung des wulstförmig ausgebildeten Endes der Dichtring elastisch verformt wird und über einen bestimmten Teil des Querschnittsumfanges linienförmig an den ihn umgebenden Oberflächenbereichen des wulstförmig ausgebildeten Endes des Fittings und des Rohres zur Anlage kommt. Zur Aufnahme der bei entsprechendem Innendruck auftretenden Längskräfte wird der dem wulstförmig ausgebildeten Ende benachbarte zylindrische Bereich des Fittings zusammen mit dem Rohr plastisch verformt. Entsprechend der Kontur der Ausnehmung in den Backen des Preßwerkzeuges wird in diesem zylindrischen Bereich eine Sicke mit einer etwa sechseckigen Querschnittskonfiguration angeformt. Bei der Verpressung werden das wulstförmig ausgebildete Ende als auch der benachbarte zylindrische Bereich mittels der Betätigungsvorrichtung gleichzeitig verformt. Die Backen mit der maulartigen Ausnehmung sind gelenkig in der Haltevorrichtung angeordnet und werden entweder hydraulisch oder elektromechanisch mittels Druckrallen scherenartig geschlossen. Mit diesem bekannten Verfahren wird eine Verbindung hergestellt, die auf den Niederdruckbereich bis 16 bar und auf einen Abmessungsbereich gleich kleiner 54 mm beschränkt ist. Eine weitere Einschränkung ist dadurch gegeben, daß mit diesem Verfahren nur speziell hergestellte Leitungsrohre mit eingeschränkten Toleranzen miteinander verbunden werden können.

Aus der nicht gattungsbildenden Schrift GB-A-1,321,652 ist weiterhin bekannt, das einen Dichtring aufnehmende wulstartig ausgebildete Ende eines Fittings durch ein geeignet geformte Backen aufweisendes Werkzeug radial auf das Rohrende zu pressen. Bei der radialen Verpressung, bei der der Durchmesser des wulstartig ausgebildeten Endes verringert wird, kommt der Dichtring auf der Rohroberfläche zur Anlage ohne daß das Rohr mitverformt wird. Das wulstartig ausgebildete Ende ist nach der Verpressung axial gestreckt und am stirnseitigen Ende verbleibt zwischen Rohroberfläche und Fitting ein Spalt. Diese Rohrverbindung ist nicht geeignet zur Aufnahme großer Längskräfte infolge hoher Innendrücke, da Fitting und Rohr nicht miteinander verklammert sind. Die bleibende elastische Spannung im Dichtring ist gering, da die Verpressung nur radial erfolgt und das wulstartig ausgebildete Ende axial gestreckt wird.

Aufgabe der Erfindung ist es, das bereits bekannte Verfahren so abzuändern bzw. eine Varrichtung zu schaffen, die es ermöglichen, eine unlösbare dichte Verbindung von Rohren herzustellen für Innendrücke von größer 16 bar und mit der auch standardmäßig hergestellte Leitungsrohre, insbesondere für den Abmessungsbereich gleich größer 54 mm verbunden werden können.

Diese Aufgabe wird durch die kennzeichnenden Merkmale des Hauptanspruches gelöst. Das erfindungsgemäße Verfahren zeichnet sich dadurch aus, daß die Backen nach dem Ansetzen nicht mehr scherenartig, sondern gleichzeitig zentrisch zueinander bewegt werden. Des weiteren wurde die plastische Verformung des wulstförmig ausgebildeten Endes in der Weise geändert, daß neben der bisher üblichen überwiegenden Durchmesserverringerung des Scheitelbereiches durch radial wirkende Kräfte, die an den Scheitelbereich angrenzenden Bereiche durch im wesentlichen axial wirkende Kräfte aufeinander zugedrückt werden, wobei der in den zylindrischen Bereich des Fittings übergehende schrägliegende Bereich des wulstförmig ausgebildeten Endes stärker axial gedrückt wird als der stirnseitige Bereich. Nach der Verpressung liegen im Idealfall diese beiden an den Scheitelbereich angrenzenden Bereiche spiegelbildlich zueinander und bilden zusammen mit dem Scheitelbereich eine parabelförmige Kontur. Beide Maßnahmen wirken sich nun so aus, daß der Dichtring ohne Quetschung nach dem Verpressen unter einer hohen gleichmäßig über den Umfang verteilten Spannung steht und in jeder Querschnittsebene des Umfanges eine nahezu gleich großer Teil des Querschnittsumfanges des Dichtringes an den ihn umgebenden Oberflächenbereichen des wulstförmig ausgebildeten Endes und des Rohres zur Anlage kommt. Weiterhin wird der dem wulstförmig ausgebildeten Ende benachbarte zylindrische Bereich des Fittings nahezu kreisförmig auf einen kleineren Durchmesser verringert. Die letztgenannte Maßnahme dient dazu, die mit steigenden Innendrücken größer werdenden Längskräfte sicher aufzufangen.

Für eine sichere Langzeitdichtung bei höheren Drücken muß der Dichtring unter einer möglichst hohen elastischen Spannung stehen und diese Spannung muß über den Umfang gleichmäßig verteilt sein. Bei einer ungleichmäßigen Verteilung der Spannung, was bei dem bisher bekannten Verfahren der Fall war, gleichen sich durch Kriechbewegungen relativ rasch schon nach wenigen Betriebsstunden die Spitzen und Tiefen der

2

Spannungsverteilung aus, so daß sich ein insgesamt niedrigeres Niveau der Spannung ergibt. Ursache für die bisher ungleichmäßige Verteilung der elastischen Vorspannung des Dichtringes war die ungleichmäßige Verformung des wulstförmig ausgebildeten Endes. Die scherenartige Schließbewegung der Backen hat zur Folge, daß der im Schließbereich der Backen liegende Teil des wulstförmig ausgebildeten Endes nur noch einen Bruchteil an plastischer Verformung erfährt im Vergleich zu dem im Ansetzbereich der Backen liegenden Teil.

Ein weiteres Merkmal der Erfindung ist dadurch gekennzeichnet, daß der Dichtring in jeder Querschnittsebene des Umfanges mit einem nahezu gleich großen Anteil des Querschnittsumfanges linienförmig an den ihn umgebenden Oberflächenbereichen zur Anlage kommt. Es ist leicht einsehbar, daß die Dichtfunktion um so besser erfüllt wird, je größer der Anteil des Querschnittsumfanges des verformten Dichtringes ist, der zur Anlage kommt und je gleichmäßiger diese Anlage über dem Umfang ist. Als unterste Grenze für die Anlage wird dabei ein Wert von 80 % des Querschnittsumfanges des verformten Dichtringes angesehen. Dabei ist es erfindungswesentlich, daß diese starke Querschnittsverformung des Dichtringes ohne Quetschung erfolgt. Quetschstellen würden den Dichtring vorschädigen und damit die Lebensdauer stark erniedrigen. Die kritischen Quetschstellen liegen in den sich ergebenden Zwickelbereichen zwischen den auf das Rohr gedrückten Bereichen des wulstförmig ausgebildeten Endes und dem tangierenden Rohrbereich.

Die mit steigenden Drücken ansteigenden Längskräfte, die versuchen, das Rohr aus der Verbindung herauszudrücken, werden erfindungsgemäß dadurch aufgefangen, daß der Durchmesser des dem wulstförmig ausgebildeten Ende benachbarte zylindrische Bereich des Fittings nahezu kreisringförmig verringert wird. Dies bedeutet, daß die bisher trapezförmige bzw. sechseckige Sicke durch eine nahezu umlaufende Sicke ersetzt wird. Damit wird die Verklammerung zwischen Rohr und Fitting wesentlich verbessert. Die Verklammerung kann noch dadurch gesteigert werden, daß weitere kreisringförmige Sicken auf dem zylindrischen Teil des Fittings angepreßt werden.

Die erfindungsgemäße Vorrichtung zur Durchführung des Verfahrens weist eine mit einer Betätigungsvorrichtung verbundene Haltevorrichtung auf, die mit gelenkig angeordneten Backen versehen ist. Die Backen schließen nicht mehr scherenartig, sondern bewegen sich gleichzeitig zentrisch zueinander vergleichbar wie die Rollen eines Walzenkalibers. Damit und mit der entsprechenden Ausgestaltung der Kontur der maulartigen Ausnehmung der Backe wird erreicht, daß das wulstförmig ausgebildete Ende des Fittings gleichmäßig über den Umfang plastisch verformt wird.

Die für die Verformung des wulstförmig ausgebildeten Endes entsprechend ausgebildete Rille in der Ausnehmung der Backe weist einen kleineren Radius für die kreisförmige Kontur im Vergleich zum gekrümmten Scheitelbereich des wulstförmig ausgebildeten Endes auf, so daß der Ansetzpunkt der Backe weiter nach außen verlagert wird. Damit kann das wulstförmig ausgebildete Ende des Fittings stärker plastisch verformt und die an den Scheitelbereich anschließenden Bereiche durch axial wirkende Kräfte stärker in Richtung Dichtring zueinander gedrückt werden, so daß dadurch der Dichtring höher elastisch vorgespannt und der Anteil des zur Anlage kommenden Querschnittsumfanges vergrößert wird.

Für die Anpressung der nahezu kreisringförmigen Sicke weist die Ausnehmung der Backe einen Endbereich auf, der halbschalenartig ausgebildet ist. Dieser Endbereich ist durch einen zylindrisch ausgebildeten Bereich von der Rille getrennt, wobei der Innendurchmesser dieses Zwischenbereiches kleiner ist als der im Scheitel der Rille liegende und mindestens gleich oder größer ist als der Außendurchmesser des zylindrischen Teiles des Fittings. Die axiale Erstreckung des zylindrisch ausgebildeten Zwischenbereiches wird dabei so gewählt, daß während des Preßvorganges der die Sicke anformende Endbereich immer im zylindrischen Teil des Fittings liegt. Die Größe der axialen Erstreckung des Zwischenbereiches muß dabei als ein Kompromiß angesehen werden zwischen der Zunahme der Dicke der Backe einerseits und einer Minimierung der Beeinflussung der Anformung der Sicke auf die Umformung des wulstförmig ausgebildeten Endes andererseits. Macht man den Zwischenbereich sehr groß, dann verschiebt man zwar den Endbereich weiter in den zylindrischen Bereich des Fittings und minimiert dadurch die nicht erwünschte Beeinflussung der Anformung des wulstförmig ausgebildeten Endes, aber man vergrößert damit auch die Ausmaße der Backe, was zugleich eine Erhöhung des Gewichtes und damit eine Erschwerung der Handhabung bedeutet.

Die kreisringförmige Kontur des Endbereiches erstreckt sich im Falle der Anordnung von zwei gleichartig ausgebildeten Backen symmetrisch vorzugsweise über 130 Grad und geht dann in einen die Tangente bildenden Abschnitt über. Die größte radiale Erstreckung dieses Endbereiches, in diesem besonderen Fall in der Teilungsebene der Backe, ist gleich der des angrenzenden zylindrischen Bereiches. Im geschlossenen Zustand der Backen ergibt dieser Endbereich im Falle zweier Backen einen zitronenförmigen Querschnitt. Die überwiegend kreisringförmige Kontur des Endbereiches erzeugt im zylindrischen Bereich des Fittings eine nahezu umlaufende Sicke, die hinsichtlich ihres Effektes der Verklammerung des Fittings mit dem Rohr wesentlich wirksamer ist, als die bisher bekannte trapezförmig bzw. sechseckig ausgebildete Sicke. Die beiden daran anschließenden geraden Abschnitte haben den Sinn, daß zum einen ein ausreichend hoher Druck in radialer Richtung ausgeübt werden kann, was bei einer völligen Umschließung des zylindrischen Bereiches des Fittings nicht möglich wäre und zum anderen Raum geschaffen wird, in den das verpreßte Material abfließen kann.

Zur Verbesserung der Verklammerung zwischen Fitting und Rohr können weitere kreisringförmig ausgebildete Sicken im zylindrischen Teil des Fittings angepreßt werden. Dies kann dadurch geschehen, daß die Betätigungsvorrichtung ein zweites Mal angesetzt und eine weitere Sicke gepreßt wird. Damit die beim ersten Preßvorgang entstandene Sicke nicht beschädigt wird, ist es vorteilhaft, den einen Endbereich in der Ausnehmung der Backe genau in die schon angepreßte Sicke zu legen und mit dem zweiten Endbereich die weitere Sicke zu pressen. Eine andere Möglichkeit besteht darin, auf einer Seite die Backe in axialer Richtung hin zu verbreitern und mindestens einen weiteren durch einen zylindrischen Bereich getrennt angeordneten Endbereich vorzusehen. Dieser zweite in der weiteren Erstreckung liegende Endbereich weist dieselbe Kontur und Abmessung auf wie der benachbart liegende. Der Vorteil dieses Vorschlages liegt darin, daß mit einem einzigen Preßvorgang zwei oder mehrere Sicken im zylindrischen Teil des Fittings gepreßt werden können. In einem solchen Fall würde man auf den, auf der anderen Seite der Rille liegenden Endbereich verzichten, der nur den Sinn hat, daß man die Betätigungsvorrichtung beliebig ansetzen kann. Zur Erleichterung der Handhabung im Falle der Verlegung von Rohren unterschiedlicher Abmessungen wird vorgeschlagen, die Backen in der Haltevorrichtung selbst auswechselbar zu machen. Damit erreicht man, daß mit nur einer Haltevorrichtung ein Bereich von unterschiedlichen Rohrabmessungen abgedeckt werden. Mit diesem Vorschlag können auch die Kosten für einen kompletten Ausrüstungssatz gesenkt werden.

Mit der Erfindung wird auch eine neue Preßfittingkonstruktion vorgeschlagen, die sich dadurch auszeichnet, daß sie auch die Abdichtung bei höheren Innendrücken im Bereich größer 16 bar gewährleistet und auch handelsübliche Leitungsrohre mit einem Außendurchmesser von mehr als 54 mm sicher verbunden werden können. Dazu wurde der schrägverlaufende Abschnitt des wulstförmigen Endes mit einer Neigung im Bereich zwischen 37 bis 43 Grad, vorzugsweise 40 Grad versehen. Bisher betrug die Neigung nur max. 34 Grad. Dieser Winkel bezieht sich auf den eingeschlossenen Winkel zwischen einer parallel zur Längsachse verlaufenden Horizontalen und der Schräge. Mit dem steiler geneigten Abschnitt wird zum einen die Umfassung des unverformten Dichtringes durch das wulstförmige Ende vergrößert und sie beträgt nunmehr mindestens 127 Grad, vorzugsweise 130 Grad und zum anderen wird das axiale Beidrücken dieses Abschnittes an den Dichtring erleichtert. Eine weitere Einzelmaßnahme besteht darin, den Durchmesser der Öffnung des stirnseitigen Abschnittes zu vergrößern. Für kleinere Rohrabmessungen d. h. kleiner als 2" sollte er mindestens 1,2 mm größer sein als der Innendurchmesser des zylindrischen Teiles und mindestens 1,5 mm größer für Rohre 2″ und größer. Bei den bisher bekannten Preßfittings betrug die Durchmesserdifferenz 0,6 mm. Die Vergrößerung der Öffnung hat zur Folge, daß damit der ungehinderte Preßweg verlängert wird, bevor das Ende des stirnseitigen Abschnittes sich auf dem Rohr aufstützen kann und damit weitere plastische Verformung des wulstförmig ausgebildeten Endes behindert wird. Die dritte Maßnahme besteht in einer Vergrößerung des Schnurdurchmessers des Dichtringes und damit in einer Vergrößerung des zu verformenden Querschnittes. Damit dieser im Durchmesser größere Dichtring ohne Einbeulung in dem wulstartig ausgebildeten Ende untergebracht werden kann, ist parallel dazu das Kammervolumen im wulstartig ausgebildeten Ende durch eine Vergrößerung des Scheiteldurchmessers des konvex gekrümmten Abschnittes des wulstartigen Endes erhöht worden. Setzt man den Schnurdurchmesser des Dichtringes in Beziehung zum Innendurchmesser des zylindrisch ausgebildeten Bereiches des Fittings, dann ergibt sich ein Verhältnis von mindestens 0,1. Beispielhaft für ein zu verbindendes Rohr von 2″ Außendurchmesser bedeutet dies, daß der Runddichtring einen Schnurdurchmesser von mindestens 6,1 mm aufweist. Bei der Anordnung des im Durchmesser vergrößerten Dichtringes muß berücksichtigt werden, daß der Innendurchmesser des einen Torus bildenden Dichtringes mindestens gleich oder größer sein muß als der Innendurchmesser des zylindrisch ausgebildeten Teiles. Diese Bedingung ist nur zu erfüllen, wenn gleichzeitig mit der Erhöhung des Schnurdurchmessers auch der mittlere Durchmesser des einen Torus bildenden Dichtringes vergrößert wird, d. h. der Mittelpunkt wandert weiter radial nach außen und damit auch parallel der konvex gekrümmte Abschnitt des wulstartigen Endes des Fittings. Nur bei Einhaltung dieser Bedingungen ist gewährleistet, daß beim Einschieben des glattendigen Rohrendes der Dichtring nicht in den Zwickelbereich des wulstartig ausgebildeten Endes hineingedrückt wird und damit die Gefahr eines Verquetschens besteht.

Der entscheidende Vorteil der Verbesserung des an sich bekannten Preßfittings ist darin zu sehen, daß durch eine sorgfältig aufeinander abgestimmte Kombination von einfach zu realisierenden Einzelmaßnahmen ein Preßfitting geschaffen wurde, der für den Einsatz von Innendrücken im Bereich größer 16 bar und im besonderen für das Verbinden von handelsüblichen Leitungsrohren mit größeren Toleranzen bestens geeignet ist. Die Wirkung kann noch gesteigert werden, wenn man, wie vorgeschlagen wird, das Verhältnis von Wanddicke zu Innendurchmesser des zylindrisch ausgebildeten Teiles um 10 % gegenüber den bisher bekannten Preßfittings erhöht. Aus Gründen der festgelegten zu verbindenden Rohrabmessungen ist dies nur durch eine Erhöhung der Wanddicke in Richtung einer Vergrößerung der Außenabmessungen zu realisieren. Die Wanddickenerhöhung in dieser Höhe versteift den Preßfitting im Hinblick auf ein unzulässiges elastisches Aufweiten ohne die plastische Verformung des wulstartig ausgebildeten Endes zu beeinträchtigen. Damit ist es auch möglich, die gewünschte Kontur des verformten wulstartigen Endes genauer festzulegen, da die erhöhte Eigensteifigkeit ein unkontrolliertes Wegfließen bzw. Verschieben des Materials verhindert.

Der vorgeschlagene verbesserte Preßfitting ist anwendbar für die verschiedensten Ausführungsformen sei es als Muffe, als T-Stück, Bogen, Reduzierstück oder dergleichen. Für die Herstellung des Preßfittings können alle plastisch verformbaren Eisen- und Nichteisenmetalle und Legierungen verwendet werden.

Mit dem erfindungsgemäßen Verfahren und der dazugehörigen Vorrichtung sowie dem erfindungsgemäßen Preßfitting kann eine unlösbare, dichte Verbindung hergestellt werden, die auch einen Innendruck größer 16 bar gemäß den Abnahmevorschriften standhält und mit der auch Rohre mit einem über die Abmessung von 54 mm hinausgehenden Durchmesser verbunden werden können.

Die größere plastische Verformung des wulstförmig ausgebildeten Endes des Fittings und die höhere und gleichmäßig über den Umfang verteilte elastische Vorspannung des Dichtringes eröffnet zudem die Möglichkeit für diese Verbindung auch übliche Leitungsrohrquarlitäten mit größeren Fertigungstoleranzen im Vergleich zu den speziell hergestellten Leitungsrohren einzusetzen.

In der Zeichnung sind die Einzelheiten der erfindungsgemäßen Vorrichtung näher erläutert.

Es zeigen:

Fig. 1 einen Teilausschnitt der Vorderansicht der zwei Backen aufweisenden Vorrichtung

Fig. 2 einen Teilbereich des Schntites entlang der Linie A-A in Fig. 1

Fig. 3 die Einzelheit der Kontur der Rille in Fig.2 und

Fig. 4 einen hälftigen Längsschnitt durch den erfindungsgemäßen Preßfitting einschließlich des eingeschobenen Rohres

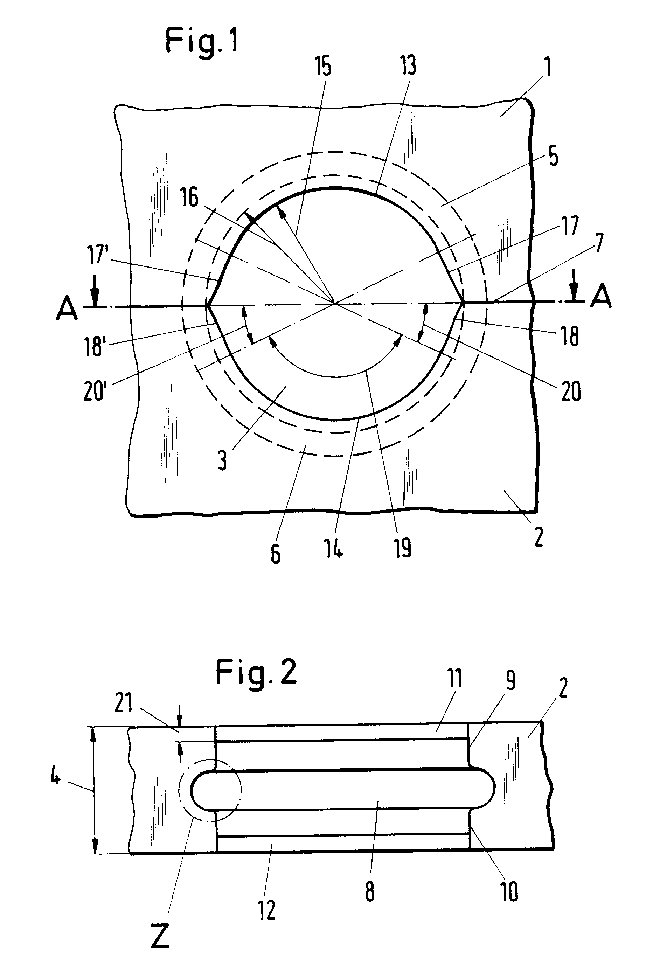

Figur 1 zeigt einen Teilausschnitt der Vorderansicht der erfindungsgemäßen Vorrichtung. In diesem Ausführungsbeispiel besteht sie aus zwei gleich ausgebildeten Backen 1,2, die im geschlossenen Zustand ein entsprechend geformtes Kaliber 3 bilden. Beide Backen 1,2 weisen eine über die Dicke 4 (Figur 2) der Backen 1,2 sich erstreckende Ausnehmungen 5,6 auf. In Figur 2, der ein Schnitt entlang der Linie A-A in Figur 1 ist und in diesem Ausführungsbeispiel mit der Teilungsebene 7 der beiden Backen 1,2 zusammenfällt, sind die Einzelheiten der Ausnehmung 6 dargestellt, die identisch ist mit der Ausnehmung 5 der darüber liegenden Backe 1. In der axialen Mitte der Ausnehmung 6 der Backe 2 ist eine Rille 8 angeordnet, die eine kreisbogenförmige Kontur aufweist und sich über den ganzen Umfang der Ausnehmung 6 erstreckt. Auf beiden Seiten der Rille 8 schließt sich in axialer Richtung je ein zylindrisch ausgebildeter Bereich 9,10 an, dessen Innendurchmesser immer kleiner ist, als der im Scheitelpunkt der Rille 8 liegende Innendurchmesser. An diesem zylindrisch ausgebildeten Bereich 9,10 schließt sich ein Endbereich 11,12 an, dessen Innendurchmesser ebenfalls kleiner ist als der im Scheitelpunkt der Rille 8 liegende Innendurchmesser. Die Kontur dieses Endbereiches 11,12 ist in Figur 1 zu erkennen. Von der Mitte der Ausnehmung 5,6 ausgehend erstreckt sich symmetrisch nach beiden Seiten ein kreisbogenförmiger Abschnitt 13,14, dessen Radius 15 kleiner ist als der 16 des benachbart liegenden zylindrisch ausgebildeten Bereiches 9,10. An diesem kreisbogenförmig ausgebildeten Abschnitt 13,14 schließt sich je ein die Tangente bildender gerader Abschnitt 17,17′, 18,18′ an. Die größte radiale Erstreckung der beiden Endbereiche 11,12 liegt in diesem Ausführungsbeispiel in der Teilungsebene der beiden Backen 1,2 und ist gleich dem Durchmesser des benachbart liegenden zylindrisch ausgebildeten Bereiches 9,10. Die Erstreckung 19 des kreisbogenförmig ausgebildeten Abschnittes 13,14 beträgt in diesem Beispiel 130 Grad und damit die Erstreckung 20,20′ der beiden geraden Abschnitte 18,18′ je 25 Grad. Die axiale Erstreckung 21 des Endbereiches 11,12 soll mindestens 3 mm betragen, wobei die axiale Erstreckung der zylindrisch ausgebildeten Bereiche 9,10 so gewählt wird, daß der Endbereich 11,12 während des Preßvorganges immer im zylindrischen Bereich des Fittings liegt. Die Anordnung eines zweiten Endbereiches ist für das Funktionieren der Verpressung an sich nicht erforderlich, aber aus Gründen der Narrensicherheit der Handhabung der Backe durch den Installateur ist dieser zusätzliche Endbereich angebracht worden.

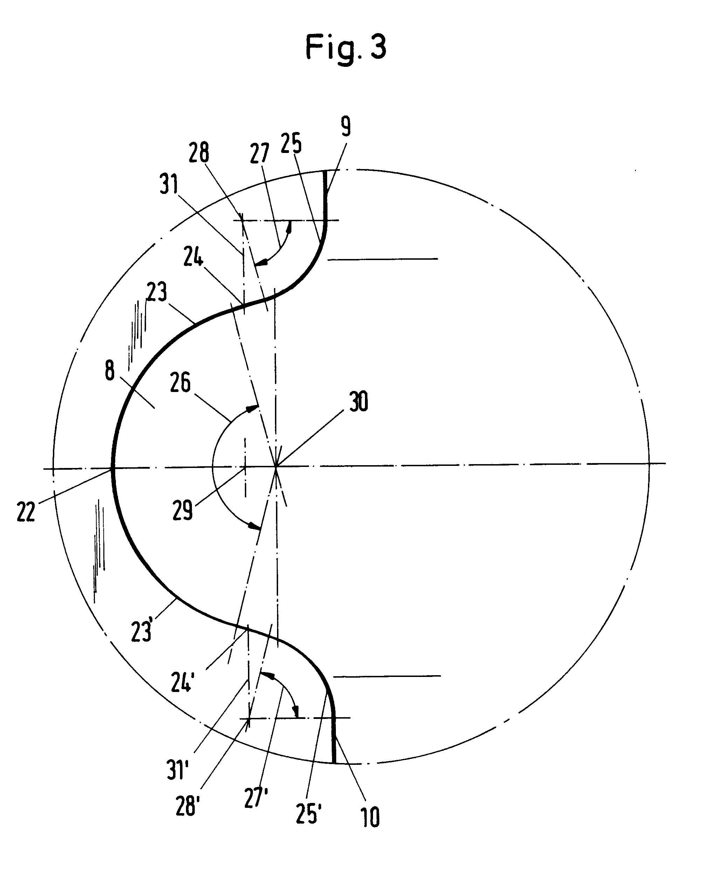

Die Einzelheit Z der Kontur der Rille 8 ist in Figur 3 in einem vergrößerten Maßstab dargestellt. Diese Kontur setzt sich aus einem symmetrisch vom Scheitelpunkt 22 der Rille 8 ausgehenden kreisbogenförmig ausgebildeten Abschnitt 23 und einen daran anschließenden, die Tangente bildenden geraden Abschnitt 24,24′ zusammen, der über einen weiteren kreisbogenförmig, aber mit entgegengesetzter Krümmung ausgebildeten Abschnitt 25,25′ in den zylindrisch ausgebildeten Bereich 9,10 übergeht. Die Erstreckung 26 des ersten kreisbogenförmig ausgebildeten Abschnittes 23 beträgt in diesem Beispiel 150 Grad und die 27,27′ des zweiten kreisbogenförmig ausgebildeten Abschnittes 25,25′ 75 Grad. Die die beiden Mittelpunkte 28,28′ der beiden kreisbogenförmig ausgebildeten Abschnitte 25,25′ verbindenden Linie 31 schneidet die durch den Scheitelpunkt 22 der Rille 8 gehende Ebene in einem Punkt 29, der innerhalb des sich vom Scheitelpunkt 22 zum Mittelpunkt 30 des ersten kreisbogenförmig ausgebildeten Abschnittes 23 sich erstreckenden Radius liegt.

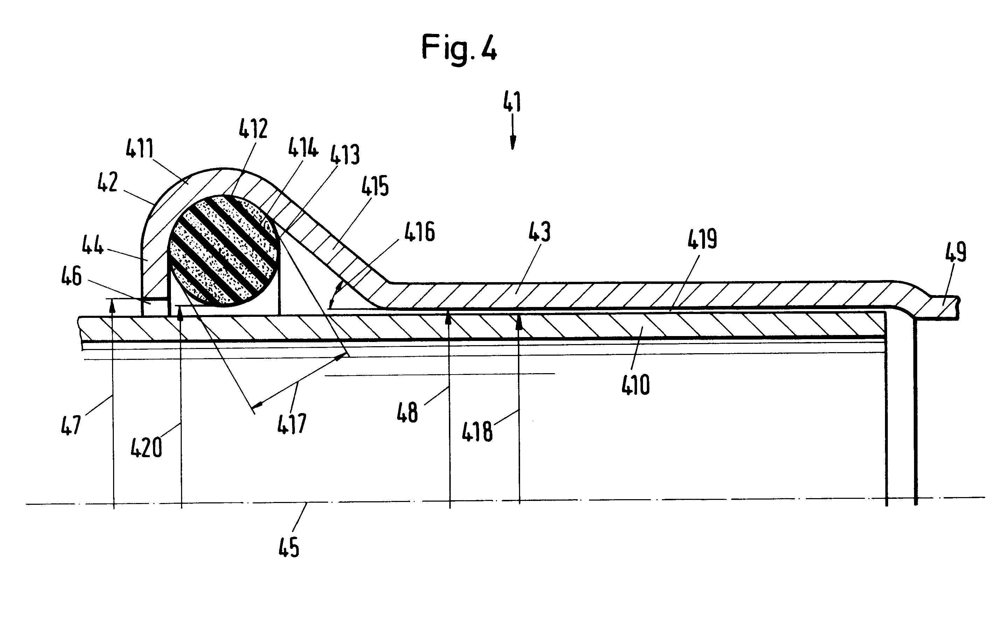

In der Fig. 4 ist ein hälftiger Längsschnitt des erfindungsgemäßen Preßfittings 41 zusammen mit dem eingeschobenen Rohr 410 dargestellt. Dabei kann dieses dargestellte Teilstück des Preßfittings 41 Element eines Bogens, eines T-Stücks, einer Muffe oder eines Reduzierstückes sein. Der Preßfitting 41 weist ein im Querschnitt hakenförmig und wulstartig ausgebildetes Ende 42 auf, an den sich ein in Längsrichtung erstreckender zylindrisch ausgebildeteter Bereich 43 anschließt. Das wulstartig ausgebildete Ende 42 weist im Querschnitt einen stirnseitig geraden Abschnitt 44 auf, der nahezu senkrecht zur Längsachse 45 des Fittings liegt und dessen radiales Erstreckungsende eine kreisrunde Öffnung 46 bildet. Der Durchmesser 47 dieser Öffnung 46 ist dabei mindestens um 1,2 mm größer als der Innendurchmesser 48 des zylindrisch ausgebildeten Bereichs 43. Für Rohrabmessungen von 2" und größer beträgt der Durchmesser dieser Öffnung 46 mindestens 1,5 mm. Am Ende der Längserstreckung des zylindrisch ausgebildeten Bereichs 43 ist eine radial nach innen sich erstreckende sickenförmige Vertiefung angeformt, die als Anschlag für das einzuschiebende Rohr 410 dient.

An den stirnseitig geraden Abschnitt 44 des wulstförmig ausgebildeten Endes 42 schließt sich ein kreisbogenförmig konvex gekrümmter Abschnitt 411 an, dessen Innenkontur 412 der Außenkontur 413 des Dichtringes 414 angepaßt ist. An diesen gekrümmten Abschnitt 411 schließt sich ein schrägverlaufender gerader Abschnitt 415 an, der dann abgerundet in den zylindrisch ausgebildeten Bereich 43 übergeht. Dieser schrägverlaufende Abschnitt weist eine Neigung 416 von 37 bis 43 Grad, vorzugsweise 40 Grad auf. Damit wird eine Umfassung des unverformten Dichtringes 414 durch die Innenkontur 412 des wulstartig ausgebildeten Endes 42 von 130 Grad erreicht. Der Schnurdurchmesser 417 des Dichtringes 414 wird so groß als möglich gewählt und beträgt für Rohrabmessungen von 2" und größer mindestens 6,1 mm. Unabhängig davon soll das Verhältnis von Schnurdurchmesser 417 zu Innendurchmesser 48 des zylindrisch ausgebildeten Bereichs 43 mindestens 0,1 betragen.

Für die Montage ist es erforderlich, daß das Toleranzfeld des äußeren Durchmessers 418 des zu verbindenden Rohres 410 mit dem des Innendurchmesser 48 zylindrisch ausgebildeten Rohres 43 so aufeinander abgestimmt ist, daß auch beim Zusammentreffen von ungünstigen min- und max-Werten zwischen Rohr 410 und Fitting 41 ein Spiel 419 verbleibt. Würden sich die Toleranzfelder im ungünstigsten Falle überschneiden, könnte das Rohr 410 nicht in den Fitting 41 eingeschoben werden. Passend dazu sind die radialen Abmessungen des Dichtringes 414 so zu wählen, daß der Innendurchmesser 420 des einen Torus bildenden Dichtringes 414 mindestens gleich oder etwas größer ist als der Innendurchmesser 48 des zylindrisch ausgebildeten Bereiches 43. Im Falle eines zu kleinen Innendurchmessers 420 des Dichtringes 414 besteht die Gefahr, daß beim Einchieben des Rohres 410 der Dichtring 414 in den Zwickelbereich des wulstförmig ausgebildeten Endes 42 geschoben und der Dichtring 414 dann beim Verpressen verquetscht wird.


## Patentansprüche

1. Verfahren zur Herstellung einer unlösbaren dichten Verbindung von Rohren (410), mit einem die glattendigen Rohrenden umfassenden Fitting (41), dessen eine hakenförmige Querschnittskontur aufweisende, wulstförmig ausgebildete Enden (42) je einen Dichtring (414) aufnehmen, wobei durch Verpressung mittels einer mit einer Betätigungsvorrichtung verbundenen, mehrere gelenkig angeordnete Backen (1,2) aufweisenden Haltevorrichtung,
   – der gekrümmte Scheitelbereich (411) des wulstförmig ausgebildeten Endes (42) durch im wesentlichen radial wirkende Kräfte auf einen kleineren Durchmesser verringert wird und
   – die an den Scheitelbereich (411) angrenzenden nahezu geradlinigen Bereiche (44,415) des wulstförmig ausgebildeten Endes (42) so verformt werden, daß nach dem Verpressen der Querschnitt des wulstförmig ausgebildeten Endes (42) annähernd parabelförmig ist und der Dichtring (414) ohne Quetschung unter einer elastischen Spannung steht und über einen großen Teil des Querschnittumfanges linienförmig an den ihn umfassenden Oberflächenbereichen des wulstförmig ausgebildeten Endes (42) und des Rohres (410) zur Anlage kommt und
   – gleichzeitig ein im axialen Abstand dazu zylindrischer Bereich (43) des Fittings (41) zusammen mit dem Rohr (410) plastisch verformt wird,
**dadurch gekennzeichnet,**
daß die Backen (1,2) nach dem Ansetzen gleichzeitig zentrisch zueinander bewegt werden und die an den Scheitelbereich (411) angrenzenden Bereiche (44,415) des wulstförmig ausgebildeten Endes (42) durch die im wesentlichen axial wirkenden Kräfte so aufeinander gedrückt werden, daß der in den zylindrischen Bereich (43) des Fittings (41) übergehende schrägliegende Bereich (415) des wulstförmig ausgebildeten Endes (42) stärker in axialer Richtung gedrückt wird als der gegenüberliegende stirnseitige Bereich (44) und nach dem Verpressen spiegelbildlich zu diesem verläuft, und der Dichtring (414) ohne Quetschung unter einer hohen und gleichmäßig über den Umfang verteilten elastischen Spannung steht und in jeder Querschnittsebene des Umfanges über einen nahezu gleich großen Teil des Querschnittumfanges linienförmig an den ihn umfassenden Oberflächenbereichen des wulstförmig ausgebildeten Endes (42) und des Rohres (410) zur Anlage kommt

6

und der Umfang des im axialen Abstand zum wulstförmig ausgebildeten Ende (42) liegende zylindrische Bereich (43) des Fittings (41) über nahezu gleich große, getrennt voneinander liegende segmentartige Bereiche kreisringförmig verringert wird.

2. Verfahren nach Anspruch 1,
**dadurch gekennzeichnet,**
daß die elastische Verformung des Dichtringes (414) in jeder querschnittsebene mindestens 10 % beträgt.

3. Verfahren nach Anspruch 1 oder 2,
**dadurch gekennzeichnet,**
daß die linienförmige Anlage des Dichtringes (414) mindestens 80 % des Querschnittumfanges des verformten Dichtringes (414) beträgt.

4. Verfahren nach einem der Ansprüche 1 - 3,
**dadurch gekennzeichnet,**
daß der Umfang des im axialen Abstand zum wulstförmig ausgebildeten Ende (42) liegenden zylindrischen Bereichs (43) des Fittings (41) über zwei gleich große, einander gegenüberliegende segmentartige Bereiche kreisringförmig verringert wird.

5. Verfahren nach einem der Ansprüche 1 - 4,
**dadurch gekennzeichnet,**
daß mehrere getrennt voneinander liegende zylindrische Bereiche (43) nahezu kreisförmig auf einen kleineren Durchmesser verringert werden.

6. Verfahren nach einem der Ansprüche 1 - 5,
**dadurch gekennzeichnet,**
daß der Durchmesser der kreisringförmigen segmentartigen Bereiche des verformten zylindrischen bereiches mindestens 5 % kleiner ist als der Ausgangsdurchmesser des unverformten zylindrischen Bereiches (43).

7. Vorrichtung zur Durchführung des Verfahrens nach einem der Ansprüche 1 - 6, bestehend aus einer Betätigungsvorrichtung, die mit einer auswechselbaren Haltevorrichtung verbunden ist, die mehrere gelenkig angeordnete Backen (1,2) aufweist, deren über die Dicke (4) der Backe (1,2) sich erstreckende, maulartig ausgebildete, bei geschlossenen Backen (1,2) ein Kaliber bildende Ausnehmungen (5,6)

– mit je einer in der axialen Mitte der Ausnehmung (5,6) in Umfangsrichtung sich erstreckenden, eine kreisbogenförmige Kontur aufweisenden Rille (8) und

– mit auf beiden Seiten der Rille (8) in axialer Richtung daran anschließenden, je einen zylindrisch ausgebildeten Bereich (9,10) dessen Innendurchmesser kleiner ist als der im Scheitelpunkt (22) der Rille (8) liegende und mindestens gleich oder größer ist als der Außendurchmesser des zylindrischen Bereiches (43) des Fittings (41) sowie

– mit einem daran anschließenden Endbereich (11,12), dessen größte radiale Erstreckung kleiner ist als die der Rille (8),

– versehen sind, wobei der in der Scheitelebene liegende . Innendurchmesser der Rille (8) immer kleiner ist als der größte Außendurchmesser des wulstförmig ausgebildeten Endes (42) des Fittings (41) und die größte radiale Erstreckung des Endbereiches (11,12) der Ausnehmung (5,6) immer kleiner ist als der Außendurchmesser des benachbarten zylindrischen Bereiches (43) im Ausgangszustand,

**dadurch gekennzeichnet,**
daß die Backen (1,2) in der Haltevorrichtung so angeordnet sind, daß sie gleichzeitig zentrisch zueinander bewegbar sind und die kreisbogenförmige Kontur (23) der Rille (8) sich symmetrisch vom Scheitelpunkt (22) über einen Bereich zwischen 140 bis 160 grad erstreckt und daran sich an beiden Enden je eine etwas über die Durchmesserebene hinausragender, die Tangente bildender Abschnitt (24,24') und daran ein über einen Bereich zwischen 75 bis 85 grad sich erstreckender, kreisbogenförmiger mit entgegengesetzter Krümmung ausgebildeter Abschnitt (25,25') anschließt, der in den zwischen der Rille (8) und dem Endbereich (11,12) liegenden zylindrisch ausgebildeten Bereich (9,10) übergeht, wobei der Radius des zweiten kreisbogenförmig ausgebildeten Abschnittes (25,25') kleiner ist als der der Rille (8) und der senkrechte Abstand von der die beiden Mittelpunkte (28,28') dieser Abschnitte verbindenden Linie (31) zum Scheitelpunkt (22) der Rille (8) geringer ist als der Radius der Rille (8) und die beiden Endbereiche (11,12) der Ausnehmung (5,6) der jeweiligen Backe (1,2) halbschalenartig ausgebildet sind mit einem symmetrisch von der Mitte über einen großen Umfangsbereich sich erstreckenden, kreisbogenförmig ausgebildeten Abschnitt (13,14) und daran je ein die Tangente bildender gerader Abschnitt (17,17', 18,18') sich anschließt und die größte radiale Erstreckung des Endbereiches (11,12) gleich ist dem des zwischen der Rille (8) und dem Endbereich (11,12) liegenden zylindrisch ausgebildeten Bereiches (9,10) der Ausnehmung (5,6) und die axiale Erstreckung der zylindrisch ausgebildeten Bereiche (9,10) so gewählt ist, daß der Endbereich (11,12) der Ausnehmung (5,6) beim Preßvorgang immer im zylindrischen Bereich des Fittings (41) liegt.

8. Vorrichtung nach Anspruch 7,

7

**dadurch gekennzeichnet,**
daß der im Scheitelpunkt (22) liegende Innendurchmesser der Rille (8) um mindestens 1,5 % kleiner ist als der größte Außendurchmesser des wulstförmig ausgebildeten Endes (42) des Fittings (41).

9. Vorrichtung nach Anspruch 7 oder 8,

**dadurch gekennzeichnet,**
daß der Radius des zweiten kreisbogenförmigen Abschnittes (25,25′) um den Faktar im Bereich zwischen 1,5 bis 2,5 kleiner ist als der der Rille (8).

10. Vorrichtung nach einem der Ansprüche 7 - 9,

**dadurch gekennzeichnet,**
daß die Haltevorrichtung zwei gleich ausgebildete Backen (1,2) aufweist.

11. Vorrichtung nach einem der Ansprüche 7 - 10,

**dadurch gekennzeichnet,**
daß der kreisbogenförmig ausgebildete Abschnitt (13,14) des Endbereiches (11,12) sich symmetrisch über einen Bereich von 120 bis 140 Grad erstreckt.

12. Vorrichtung nach einem der Ansprüche 9 - 11,

**dadurch gekennzeichnet,**
daß die axiale Erstreckung des Endbereiches (11,12) mindestens 3 mm beträgt.

13. Vorrichtung nach einem der Ansprüche 9 - 12,

**dadurch gekennzeichnet,**
daß die Backen (1,2) auf einer Seite in axialer Richtung sich über den Endbereich (11,12) hinaus erstrecken und im Abstand zum ersten Endbereich (11,12) mindestens einen weiteren gleich gestalteten Endbereich aufweisen und der zwischen beiden Endbereichen liegende Bereich zylindrisch ausgebildet ist mit einem Innendurchmesser, der mindestens gleich oder größer ist als der Außendurchmesser des zylindrischen Bereiches (43) des Fittings (41).

14. Preßfitting (41) zur Herstellung einer unlösbaren, dichten Verbindung von Rohren (410), der mindestens ein im querschnitt hakenförmig und wulstartig ausgebildetes, einen Runddichtring (414) aufnehmendes Ende (42) und einen daran anschließenden zylindrisch ausgebildeten in Längsrichtung sich erstreckenden Bereich (43) aufweist, der am Ende der Erstreckung mit einer als Anschlag für das einschiebbare glattendige Rohr (410) wirkenden sickenförmigen Vertiefung (49) versehen ist, wobei im querschnitt das wulstartige Ende (42) einen stirnseitig geraden Abschnitt (44), der nahezu senkrecht zur Längsachse (45) des Fittings (41) verläuft und einen daran anschließenden, eine der äußeren Querschnittskontur des Dichtringes (414) angepaßte Innenkontur aufweisenden, kreisbogenförmig konvex gekrümmten Abschnitt (411) aufweist, dem sich eine in Richtung zur Längsachse hin geneigter, gerader Abschnitt (415) anschließt, der abgerundet in den zylindrisch, ausgebildeten Bereich (43) übergeht und das Ende der radialen Erstreckung des stirnseitigen geraden Abschnittes (44) eine kreisrunde öffnung(46) bildet, deren Durchmesser (47) etwas größer ist als der Innendurchmesser (48) des zylindrisch ausgebildeten Teiles (43),

**gekennzeichnet durch**
die Kombination folgender Merkmale

a) der schräg verlaufende gerade Abschnitt (415) des wulstartig ausgebildeten Endes (42) weist eine auf die Horizontale bezogene Neigung (416) im Bereich von 37 bis 43 Grad auf,
b) der Durchmesser (47) der öffnung (46) auf dem jeweils stirnseitigen Ende (44) ist mindestens 1,2 mm größer als der Innendurchmesser (48) des zylindrisch ausgebildeten Bereiches (43),
c) das Verhältnis von Schnurdurchmesser (417) des unverformten Dichtringes (414) zu Innendurchmesser (48) des zylindrisch ausgebildeten Bereiches (43) beträgt mindestens 0,1 und der Innendurchmesser (420) des einen Torus bildenden unverformten Dichtringes (414) ist mindestens gleich oder größer als der Innendurchmesser (48) des zylindrisch ausgebildeten Bereiches (43).

15. Preßfitting nach Anspruch 14,

**dadurch gekennzeichnet,**
daß für zu verbindende Rohre (410) mit einem Durchmesser von 2″ und größer der Durchmesser (47) der Öffnung (46) auf dem jeweiligen stirnseitigen Ende (44) mindestens 1,5 mm größer ist als der Innendurchmesser (48) des zylindrisch ausgebildeten Bereiches (43).

16. Preßfitting nach Anspruch 14 oder 15,

**dadurch gekennzeichnet,**
daß für zu verbindende Rohre (410) mit einem Durchmesser von 2″ und größer der Schnurdurchmesser (417) des unverformten Dichtringes (414) mindestens 6,1 mm beträgt.

17. Preßfitting nach einem der Ansprüche 14 bis 16,

**dadurch gekennzeichnet,**
daß das Verhältnis von Wanddicke zu Innendurchmesser (48) des zylindrisch ausgebildeten Bereiches (43) um 10 % größer ist als bei den bisher bekannten Preßfittings.

**Claims**

1. A method for producing an undetachable, hermetic connection for pipes (410), with a fitting (41) surrounding the smooth-ended pipe ends, the bead-shaped ends (42) of which fitting, which have a hook-shaped cross-sectional contour, each receive a sealing ring (414), whereby by pressing by means of a holding device connected to an actuating device and having a plurality of articulated jaws (1, 2),

– the curved apex region (411) of the bead-shaped end (42) is reduced to a smaller diameter by forces acting substantially radially and
– the virtually rectilinear regions (44, 415) of the bead-shaped end (42) which adjoin the apex region (411) are deformed so that after pressing the cross-section of the bead-shaped end (42) is approximately parabolic and the sealing ring (414) is under elastic tension without crushing and comes to bear, over a large part of the periphery of the cross-section, in linear manner on the surface regions of the bead-shaped end (42) and of the pipe (410) which surround it and
– at the same time a cylindrical region (43) of the fitting (41) which is at an axial distance therefrom is plastically deformed together with the pipe (410),

characterised in that

the jaws (1, 2), once they have been placed on, are moved simultaneously and centrically to one another and the regions (44, 415) of the bead-shaped end (42) adjoining the apex region (411) are pressed on one another by the forces which act substantially axially in such a manner that the oblique region (415) of the bead-shaped end (42) which merges into the cylindrical region (43) of the fitting (41) is pressed more greatly in the axial direction than the opposing end-face region (44) and runs in mirror-inverted manner thereto after pressing, and the sealing ring (414) without crushing is under a high elastic tension which is distributed evenly across the periphery and in each cross-sectional plane of the periphery comes to bear in linear manner on the surface regions of the bead-shaped end (42) and of the pipe (410) which surround it via a part of the cross-sectional periphery of practically identical size and the periphery of the cylindrical region (43) of the fitting (41) which is located at an axial distance from the bead-shaped end (42) is reduced in annular manner via separately located segment-like regions of almost identical size.

2. A process according to Claim 1,
characterised in that
the elastic deformation of the sealing ring (414) in each cross-sectional plane is at least 10%.

3. A process according to Claim 1 or 2,
characterised in that
the linear contact surface of the sealing ring (414) is at least 80% of the cross-sectional periphery of the deformed sealing ring (414).

4. A process according to one of Claims 1 - 3,
characterised in that
the periphery of the cylindrical region (43) of the fitting (41) which is located at an axial distance from the bead-shaped end (42) is reduced in annular manner via two opposing segment-like regions of equal size.

5. A process according to one of Claims 1 - 4,
characterised in that
a plurality of separately located cylindrical regions (43) are reduced to a smaller diameter in almost circular manner.

6. A process according to one of Claims 1 - 5,
characterised in that
the diameter of the annular, segment-like regions of the deformed cylindrical region is at least 5% smaller than the initial diameter of the non-deformed cylindrical region (43).

7. An apparatus for carrying out the process according to one of Claims 1 - 6, consisting of an actuating device which is connected to a replaceable holding device which has a plurality of articulated jaws (1, 2), the mouth-like recesses (5, 6) of which, which extend across the thickness (4) of the jaw (1, 2) and form a calibre when the jaws (1, 2) are closed,

– are provided with one groove (8) each having an arcuate contour and extending in the peripheral direction in the axial centre of the recess (5, 6) and
– with one cylindrical region (9, 10) each on either side of the groove (8) adjacent thereto in the axial direction, the internal diameter of which is smaller than that located in the vertex (22) of the groove (8) and at least equal to or greater than the external diameter of the cylindrical region (43) of the fitting (41), and also

9

– with an end region (11, 12) adjoining thereon, the maximum radial extent of which is less than that of the groove (8),

– the internal diameter of the groove (8) located in the apex plane always being smaller than the maximum external diameter of the bead-shaped end (42) of the fitting (41) and the maximum radial extent of the end region (11, 12) of the recess (5, 6) always being smaller than the external diameter of the adjacent cylindrical region (43) in the initial state,

characterised in that

the jaws (1, 2) are arranged in the holding device in such a manner that they are movable simultaneously and centrically to one another and the arcuate contour (23) of the groove (8) extends symmetrically from the vertex (22) over a range of between 140 and 160 degrees and at both ends one section (24, 24′) each forming the tangent and projecting somewhat across the diametral plane adjoins thereon and an arcuate section (25, 25′) designed with an opposing curvature and extending over a range of between 75 and 85 degrees adjoins thereon, which section merges into the cylindrical region (9, 10) located between the groove (8) and the end region (11, 12), whereby the radius of the second arcuate section (25, 25′) is smaller than that of the groove (8) and the vertical distance from the line (31) connecting the two midpoints (28, 28′) of these sections to the vertex (22) of the groove (8) is smaller than the radius of the groove (8) and the two end regions (11, 12) of the recess (5, 6) of the respective jaw (1, 2) are half-shell-shaped with an arcuate section (13, 14) extending symmetrically from the centre across a large peripheral region and a straight section (17, 17′, 18, 18′) forming the tangent adjoins thereon and the maximum radial extent of the end region (11, 12) is equal to that of the cylindrical region (9, 10) of the recess (5, 6) between the groove (8) and the end region (11, 12) and the axial extent of the cylindrical regions (9, 10) is chosen so that the end region (11, 12) of the recess (5, 6) always lies in the cylindrical region of the fitting (41) during the pressing operation.

8. An apparatus according to Claim 1,

characterised in that

the internal diameter of the groove (8) located in the vertex (22) is at least 1.5% smaller than the maximum external diameter of the bead-shaped end (42) of the fitting (41).

9. An apparatus according to Claim 7 or 8,

characterised in that

the radius of the second arcuate section (25, 25′) is smaller than that of the groove (8) by a factor in the range of 1.5 to 2.5.

10. An apparatus according to one of Claims 7 - 9,

characterised in that

the holding device has two identical jaws (1, 2).

11. An apparatus according to one of Claims 7 - 10,

characterised in that

the arcuate section (13, 14) of the end region (11, 12) extends symmetrically over a range of 120 to 140 degrees.

12. An apparatus according to one of Claims 9 - 11,

characterised in that

the axial extent of the end region (11, 12) is at least 3 mm.

13. An apparatus according to one of Claims 9 - 12,

characterised in that

the jaws (1, 2) on one side extend beyond the end region (11, 12) in the axial direction and have at least one additional identical end region at a distance from the first end region (11, 12) and the region between the two end regions is cylindrical and has an internal diameter which is at least equal to or greater than the external diameter of the cylindrical region (43) of the fitting (41).

14. A press fitting (41) for producing an undetachable, hermetic seal in pipes (410), which has at least one bead-shaped end (42) which is hook-shaped in cross-section and receives a round sealing ring (414) and a cylindrical region (43) adjoining thereon which extends in the longitudinal direction, which is provided at the end of its extent with a crimped indentation (49) acting as a stop for the smooth-ended pipe (410) which can be inserted, whereby in cross-section the bead-shaped end (42) has a straight section (44) on the end face, which extends almost perpendicular to the longitudinal axis (45) of the fitting (41) and an adjoining arcuate, convex section (411) which has an internal contour matched to the external cross-sectional contour of the sealing ring (414), which section is adjoined by a straight section (415) inclined towards the longitudinal axis, which . section merges in rounded-off manner into the cylindrical region (43), and the end of the radial extent of the end-face straight section (44) forms a circular opening (46), the diameter (47) of which is somewhat larger than the internal diameter (48) of the cylindrical part (43),

characterised by

the combination of the following features:

a) the oblique straight section (415) of the bead-shaped end (42) has an inclination (416), relative to the horizontal, in the range of 37 to 43 degrees,

b) the diameter (47) of the opening (46) on the end-face end (44) in each case is at least 1.2 mm larger than the internal diameter (48) of the cylindrical region (43),

c) the ratio of the cord diameter (417) of the nondeformed sealing ring (414) to the internal diameter (48) of the cylindrical region (43) is at least 0.1 and the internal diameter (420) of the non-deformed sealing ring (414) which forms a torus is at least equal to or larger than the internal diameter (48) of the cylindrical region (43).

15. A press fitting according to Claim 14,

characterised in that

for pipes (410) which are to be connected which have a diameter of 2" or more, the diameter (47) of the opening (46) on the end-face end (44) in question is at least 1.5 mm larger than the internal diameter (48) of the cylindrical region (43).

16. A press fitting according to Claim 14 or 15,

characterised in that

for pipes (410) which are to be connected which have a diameter of 2" or more the cord diameter (417) of the non-deformed sealing ring (414) is at least 6.1 mm.

17. A press fitting according to one of Claims 14 to 16,

characterised in that

the ratio of wall thickness to internal diameter (48) of the cylindrical region (43) is 10% larger than in the press fittings known hitherto.


**Revendications**

1. Procédé pour fabriquer une jonction étanche imperdable de tubes (410), comportant un raccord (41) entourant les extrémités lisses des tubes, dont les extrémités (42) présentant une forme de bourrelet et un contour de section transversale en forme de crochet reçoivent, chacune, une bague d'étanchéité (414), par quoi, par pressage au moyen d'un dispositif de maintien présentant plusieurs mâchoires articulées (1, 2) et relié à un dispositif d'actionnement,

– la zone de crête cintrée (411) de l'extrémité (42) présentant une forme de bourrelet est diminuée à un plus petit diamètre par des forces agissant essentiellement radialement, et

– les zones (44, 415), pratiquement rectilignes et limitrophes de la zone de crête (411), de l'extrémité (42) en forme de bourrelet sont déformées de sorte que, après le pressage, la section transversale de l'extrémité (42) en forme de bourrelet présente approximativement une forme de parabole, et la bague d'étanchéité (414) est soumise à une contrainte élastique sans écrasement et vient en appui sur une grande partie de la périphérie de la section transversale, de façon linéaire, contre les zones de surface l'entourant de l'extrémité (42) en forme de bourrelet et du tube (410), et,

– simultanément, une zone cylindrique (43), à distance axiale de celle-ci, du raccord (41) est plastiquement déformée en même temps que le tube (410),

caractérisé en ce que

les mâchoires (1, 2), après mise en place, sont déplacées simultanément de façon centrée l'une vers l'autre, et les zones (44, 415), limitrophes de la zone de crête (411), de l'extrémité (42) en forme de bourrelet sont pressées par les forces agissant essentiellement axialement l'une sur l'autre, de sorte que la zone inclinée (415), se poursuivant en la zone cylindrique (43) du raccord (41), de l'extrémité (42) en forme de bourrelet est pressée plus fortement en direction axiale que la zone frontale (44) opposée et, après le pressage, s'étend de façon symétrique à celle-ci, et la bague d'étanchéité (414) est soumise à une contrainte élastique élevée et régulièrement répartie sur la périphérie sans écrasement, et, dans chaque plan de section transversale de la périphérie, vient en appui sur une partie pratiquement de même taille de la périphérie de la section transversale, de façon linéaire, contre les zones de surface l'entourant de l'extrémité (42) en forme de bourrelet et du tube (410), et la périphérie de la zone cylindrique (43), se trouvant à distance axiale de l'extrémité (42) en forme de bourrelet, du raccord (41) est diminuée en forme de couronne par des zones pratiquement de même taille, séparées l'une de l'autre, et en forme de segments.

2. Procédé selon la revendication 1,

caractérisé en ce que

la déformation élastique de la bague d'étanchéité (414) dans chaque plan de section transversale vaut au moins 10 %.

3. Procédé selon la revendication 1 ou 2,

caractérisé en ce que

l'appui linéaire de la bague d'étanchéité (414) s'étend sur au moins 80 % de la périphérie de section transversale de la bague d'étanchéité (414) déformée.

4. Procédé selon la revendication 1 à 3,

caractérisé en ce que

la périphérie de la zone cylindrique (43) du raccord (41), se trouvant à distance axiale de l'extrémité (42) en forme de bourrelet, est diminué, en forme de couronne, par deux zones de même taille, opposées l'une à l'autre, et en forme de segments.

5. Procédé selon une des revendication 1 à 4,

caractérisé en ce que

plusieurs zones cylindriques (43) séparées l'une de l'autre sont diminuées à un plus petit diamètre de façon pratiquement circulaire.

6. Procédé selon une des revendications 1 à 5,

caractérisé en ce que

le diamètre des zones en forme de segments et de couronnes de la zone cylindrique déformée est plus petit d'au moins 5 % que le diamètre initial de la zone cylindrique (43) non déformée.

7. Dispositif pour la mise en oeuvre du procédé selon l'une des revendications 1 à 6, comportant un dispositif d'actionnement, qui est relié à un dispositif de maintien interchangeable, qui comporte plusieurs mâchoires articulées (1, 2), dont les évidements (5, 6) s'étendent sur l'épaisseur (4) des mâchoires (1, 2), réalisés en forme de mors, et formant un calibre lorsque les mâchoires (1, 2) sont fermées, sont munis :

– à chaque fois d'une gorge (8) s'étendant en direction périphérique au centre axial de l'évidement (5, 6), et présentant un contour en forme d'arc de cercle, et,

– des deux côtés de la gorge (8) et s'y raccordant en direction axiale, à chaque fois d'une zone cylindrique (9, 10) dont le diamètre interne est plus petit que celui du fond (22) de la gorge (8) et est au moins égal ou plus grand que le diamètre externe de la zone cylindrique (43) du raccord (41), ainsi que,

– d'une zone d'extrémité (11, 12) s'y raccordant, dont la plus grande étendue radiale est plus petite que celle de la gorge (8), grâce à quoi le diamètre interne de la gorge (8), au fond de celle-ci, est toujours plus petit que le plus grand diamètre externe de l'extrémité (42) en forme de bourrelet du raccord (41), et la plus grande étendue radiale de la zone d'extrémité (11, 12) de l'évidement (5, 6) est toujours plus petite que le diamètre externe de la zone cylindrique voisine (43) dans l'état initial,

caractérisé en ce que

les mâchoires (1, 2) sont agencées dans le dispositif de maintien de sorte qu'elles peuvent être déplacées simultanément l'une vers l'autre de façon centrée, et le contour en forme d'arc de cercle (23) de la gorge (8) s'étend symétriquement à partir du fond (22) sur une zone entre 140 et 160 degrés, et, aux deux extrémités de celui-ci, se raccordent, respectivement, un tronçon (24, 24′) tangentiel, faisant quelque peu saillie au-dessus du plan diamétral et, à celui-ci, un tronçon (25, 25′) en forme d'arc de cercle à courbure opposée et s'étendant sur une zone entre 75 et 85 degrés, qui se poursuit par la zone (9, 10) cylindrique se trouvant entre la gorge (8) et la zone d'extrémité (11, 12), le rayon du second tronçon en forme d'arc de cercle (25, 25′) étant plus petit que celui de la gorge (8), et la distance verticale de la ligne (31) reliant les deux centres (28, 28′) de ces tronçons au fond (22) de la gorge (8) étant plus faible que le rayon de la gorge (8), et les deux zones d'extrémité (11, 12) de l'évidement (5, 6) de la mâchoire respective (1, 2) étant réalisées sous forme de demi-coquilles, avec un tronçon en forme d'arc de cercle (13, 14) s'étendant symétriquement du centre sur une grande zone périphérique et, se raccordant à celui-ci, à chaque fois, un tronçon rectiligne tangentiel (17, 17′, 18, 18′), et la plus grande étendue radiale de la zone d'extrémité (11, 12) étant égale à celle de la zone cylindrique (9, 10) s'étendant entre la gorge (8) et la zone d'extrémité (11, 12), de l'évidement (5, 6), et l'étendue axiale des zones cylindriques (9, 10) étant choisie de sorte que la zone d'extrémité (11, 12) de l'évidement (5, 6), lors du processus de pressage, se trouve toujours dans la zone cylindrique du raccord (41).

8. Dispositif selon la revendication 7,

caractérisé en ce que

le diamètre interne de la gorge (8), au fond (22) de celle-ci, est plus petit dont moins 1,5 % que le plus grand diamètre externe de l'extrémité (42) en forme de bourrelet du raccord (41).

9. Dispositif selon la revendication 7 ou 8,

caractérisé en ce que

le rayon du second tronçon en forme d'arc de cercle (25, 25′) est plus petit d'un facteur compris entre 1,5 et 2,5 que celui de la gorge (8).

10. Dispositif selon une des revendications 7 à 9,

caractérisé en ce que

le dispositif de maintien présente deux mâchoires (1, 2) identiques.

11. Dispositif selon une des revendications 7 à 10,
caractérisé en ce que
le tronçon (13, 14) en forme d'arc de cercle de la zone d'extrémité (11, 12) s'étend symétriquement sur une zone de 120 à 140 degrés.

12. Dispositif selon l'une des revendications 9 à 11,
caractérisé en ce que
l'étendue axiale de la zone d'extrémité (11, 12) vaut au moins 3 mm.

13. Dispositif selon l'une des revendications 9 à 12,
caractérisé en ce que
les mâchoires (1, 2), d'un côté en direction axiale, s'étendent sur la zone d'extrémité (11, 12) et elles présentent, à distance de la première zone d'extrémité (11, 12), au moins une autre zone d'extrémité identique, et la zone se trouvant entre les deux zones d'extémité est réalisée de façon cylindrique, avec un diamètre interne qui est au moins égal ou plus grand que le diamètre externe de la zone cylindrique (43) du raccord (41).

14. Raccord (41) pour réaliser une jonction étanche imperdable de tubes (410), qui présente au moins une extrémité (42) en forme de bourrelet et présentant une section transversale en forme de crochet, recevant une bague d'étanchéité ronde (414), et une zone cylindrique (43) s'y raccordant et s'étendant en direction longitudinale, qui, à l'extrémité de son étendue, est munie d'une empreinte (49) en forme de moulure agissant comme butée pour le tube insérable (410) à l'extrémité lisse, et, en section transversale, l'extrémité (42) en forme de bourrelet présente un tronçon frontal rectiligne (44), qui s'étend pratiquement perpendiculairement à l'axe longitudinal (45) du raccord (41), et un tronçon cintré de façon convexe (411), en forme d'arc en cercle, s'y raccordant et présentant un contour interne adapté au contour de section transversale externe de la bague d'étanchéité (414), tronçon auquel se raccorde un tronçon rectiligne (415) incliné en direction de l'axe longitudinal, qui, arrondi, se poursuit en la zone cylindrique (43), et l'extrémité de l'étendue radiale du tronçon rectiligne frontal (44) forme une ouverture circulaire (46), dont le diamètre (47) est quelque peu plus grand que le diamètre interne (48) de la zone cylindrique (43),
caractérisé par
le combinaison des caractéristiques suivantes :
    a) le tronçon rectiligne incliné (415) de l'extrémité en forme de bourrelet (42) présente une inclinaison (412), par rapport à l'horizontale, dans la plage de 37 à 43 degrés,
    b) le diamètre (47) de l'ouverture (46) à l'extrémité frontale respective (44) est d'au moins 1,2 mm plus grand que le diamètre interne (48) de la zone cylindrique (43),
    c) le rapport du diamètre de cordon (417) de la bague d'étanchéité non déformée (414) au diamètre interne (48) de la zone cylindrique (43) vaut au moins 0,1, et le diamètre interne (420) de la bague d'étanchéité (414) non déformée formant un tore est au moins égal ou plus grand que le diamètre interne (48) de la zone cylindrique (43).

15. Raccord selon la revendication 14,
caractérisé en ce que,
pour des tubes (410) à relier ayant un diamètre de 2 pouces et plus, le diamètre (47) de l'ouverture (46) à l'extrémité frontale respective (44) est plus grand d'au moins 1,5 mm que le diamètre interne (48) de la zone cylindrique (43).

16. Raccord selon la revendication 14 ou 15,
caractérisé en ce que,
pour des tubes (410) à relier ayant un diamètre de 2 pouces et plus, le diamètre de cordon (417) de la bague d'étanchéité non déformée (414) vaut au moins 6,1 mm.

17. Raccord selon une des revendications 14 à 16,
caractérisé en ce que
le rapport de l'épaisseur de paroi au diamètre interne (48) de la zone cylindrique (43) est plus grand de 10 % que pour les raccords jusqu'à présent connus.

## Fig.1

## Fig. 2

# Fig. 3

# Fig. 4

EP 0 361 630 B1